# EUROPEAN PATENT SPECIFICATION

(11) **EP 4 090 206 B1**
(45) Date of publication and mention of the grant of the patent: **17.05.2023**
(21) Application number: 22713450.9
(22) Date of filing: 01.03.2022
(51) Int. Cl.: A47J 31/46

(54) **COFFEE MACHINE PROVIDED WITH AN ARRANGEMENT FOR THE PRE-INFUSION OF THE COFFEE PANEL**
KAFFEEMASCHINE MIT EINER VORRICHTUNG ZUR VORINFUSION DES KAFFEEPANEELS
MACHINE À CAFÉ POURVUE D'UN AGENCEMENT POUR PRÉINFUSION DU PANNEAU DE CAFÉ

(30) Priority: 17.03.2021 IT 202100006356
(43) Date of publication of application: 23.11.2022
(73) Proprietor: Rancilio Group S.p.A., 20015 Parabiago (MI) (IT)
(72) Inventor: RAIMONDI, Stefano, 20015 Parabiago (MI) (IT); LOCATI, Valerio, 20015 Parabiago (MI) (IT)
(74) Representative: Robba, Pierpaolo
(86) International application number: PCT/IB2022/051795
(87) International publication number: WO 2022/195388

(56) References cited:
- EP-A1- 3 430 951
- IT-A1- MI20 091 847

## Description

### Technical Field

The present invention relates to a coffee machine, more particularly to an espresso coffee machine, comprising one or more brewing groups.

In particular, the present invention relates to a coffee machine provided with a system for delivering water under reduced pressure at a step of a pre-infusion of the coffee panel, aimed at "wetting" said coffee panel before the actual infusion step in which water under high pressure is delivered.

Advantageously, the coffee machine according to the invention further allows effecting a post-infusion step with delivery of water again under reduced pressure after said actual infusion step.

### Background Art

Coffee machines, especially espresso coffee machines, are known in which a flow of water under high pressure and at high temperature flows through a panel of coffee powder in order to generate a coffee-based beverage.

In general, said espresso coffee machines comprise one or more brewing groups, a filter holder unit containing a filter being associated with each of said brewing groups: a predetermined dose of coffee powder obtained by milling coffee beans is introduced into the filter holder and then pressed by means of a tamper, thereby obtaining a panel of coffee powder.

Said espresso coffee machines comprise or are connected to a source of water under low pressure and at low temperature and they are provided with one or more boilers for raising the temperature of water as well as with one or more pumps for raising the pressure of water, so that a flow of water under high pressure and at high temperature can be sent to the brewing group (or to one of the brewing groups) of the coffee machine and passed through the coffee panel.

Said coffee machines further comprise a control unit allowing adjusting the operational parameters of the boiler(s), of the pump(s) and of the hydraulic circuit connecting the water source to the brewing group(s), whereby the water pressure, temperature and flow rate values can be set each time depending on the desired organoleptic properties of the beverage prepared. In particularly sophisticated solutions, it can also be envisaged that the values of one or more out of pressure, temperature and flow rate of the water reaching the brewing group are not constant over the entire brewing time, but vary according to a predetermined profile stored in the control unit.

In any case, brewing of the coffee-based beverage takes place by means of a water flow at high temperature (for example about 93°) and under high pressure (for example about 9 bar).

It has been found, however, that direct introduction of a high-pressure water flow through the coffee panel brings about some drawbacks that can negatively affect the quality of the beverage obtained.

In particular, it has been observed that a high-pressure water flow coming into contact with a panel of pressed and dry coffee powder tends to establish and follow preferred paths, whereby there is no homogeneous extraction of aromatic substances from the whole dose of coffee powder. In other words, along said preferred paths extraction takes place only during a first part of the brewing step, whereas during a second part of said brewing step the water flow is unable to extract further aromatic substances; instead, in those regions of the coffee panel that are far from said paths, the extraction of aromatic substances at the end of the brewing step is only partial and non-optimized.

In order to overcome said drawback, a known solution envisages to provide a pre-infusion step upstream of the actual infusion step, in which pre-infusion step the coffee panel is passed through by a water flow at high temperature but under low pressure.

Such water flow under low pressure allows uniformly "wetting" the coffee panel, without starting the process of extraction of aromatic substances from the coffee powder.

When the thus "wetted" coffee panel is passed through by a water flow under high pressure, homogeneous diffusion of water inside the panel, and therefore homogeneous and optimized extraction of aromatic substances from the coffee powder, is observed.

The pre-infusion step with low-pressure water has further the effect of causing release of gases that may be present in the coffee powder panel (especially carbon dioxide that may be formed inside the coffee beans during roasting).

The release of gases from the coffee panel has the beneficial effect of increasing the contact surface between water and coffee powder grains, thus increasing the efficiency of extraction of aromatic substances from said coffee powder.

In order to implement the process described above - which includes a pre-infusion step and a step of actual infusion - different technical solutions were implemented in the past.

However, the known solutions have in common the fact that they are very complex.

By way of example, patent application EP 2 642 903, in the name of the Applicant, describes a coffee machine comprising a brewing group to which water at different pressure levels can be delivered. To this aim, said coffee machine comprises a hydraulic circuit in which a first duct and a second duct are provided arranged in parallel to each other, a pump arranged to raise the water pressure being provided on one (and only one) of said ducts.

In the solution described in the above-cited document, both in the first duct and in the second duct there is provided a dedicated valve, and said valves are not simple shut-off valves, but they are valves designed so as to dynamically control the pressure in each duct.

Such complexity, in this as well as in other known solutions, generally results in increased production costs, increased space requirement for the hydraulic circuit and - due to the presence of a high number of components and/or the presence of sophisticated components - increased risk of breakdowns.

European patent application EP 3 430 951 discloses an espresso coffee machine in which an adjustment of the extraction pressure can be performed and in which, namely, a "pre-infusion" step at lower pressure and an infusion step at higher pressure can be obtained.

To this aim, the espresso coffee machine disclosed in EP 3 430 951 comprises a hydraulic circuit comprising at least one booster pump that applies a predetermined pressure value to the water, a pressure sensor and a bypass circuit that branches off said main water inlet circuit upstream of the booster pump and is connected to a brewing group of the coffee machine. At least one two-way proportional valve is arranged on the bypass circuit and is configured to recirculate a part of delivery flow of the booster pump on the main water inlet circuit and upstream of the booster pump, in order to maintain a certain coffee extraction pressure value in the brewing group set in real time by the pressure sensor.

Italian patent application IT 102009901776705 (previously indicated as MI2009A001847) discloses an espresso coffee machine in which the brewing pressure can be adjusted.

To this aim, the espresso coffee machine disclosed in IT 102009901776705 comprises a hydraulic pump, at least one brewing device and a hydraulic circuit provided with a supply duct which brings the hydraulic pump into fluid communication with the brewing device. A pressure sensor and a hydraulic variable-flow valve are disposed along the hydraulic circuit, the hydraulic variable-flow valve being apt to supply variable quantities of water to the brewing device according to the pressure value detected by the pressure sensor.

The aforesaid drawbacks are even more relevant in the case of professional espresso coffee machines (commonly used in cafes, restaurants, hotels etc.), which usually comprise a plurality of brewing groups.

In this case, each brewing group must have a dedicated pre-infusion system, with consequent increase in the complexity of the coffee machine as a whole and in the drawbacks related thereto.

Alternatively, in the case in which a pre-infusion system common to all the brewing groups were provided, it would be impossible to start a brewing cycle of a brewing group whenever another brewing group were already being used.

An object of the present invention is to overcome the prior art problems set forth above, by providing a coffee machine provided with a simple and reliable system for the pre-infusion of the coffee panel, with a reduced number of components.

Another object of the invention is to provide a coffee machine that can be equipped with separate sub-systems for the pre-infusion of the coffee panel for each brewing group of the coffee machine without this involving any excessive increase in the overall complexity of the structure of the coffee machine itself.

These and other objects are achieved by a coffee machine as claimed in the appended claims.

### Summary of Invention

In a manner known per se, the coffee machine according to the invention comprises one or more brewing groups, a source of water under low pressure and at low temperature, a hydraulic circuit connecting said water source to said one or more brewing groups, a pump arranged in said hydraulic circuit, between said water source and said one or more brewing groups, and adapted to raise the pressure of the water circulating in said hydraulic circuit, and a boiler arranged in said hydraulic circuit, between said water source and said one or more brewing groups, and adapted to raise the temperature of the water circulating in said hydraulic circuit, so that a water flow at high temperature and under high pressure can be passed through said one or more brewing groups.

Each of the one or more brewing groups of the coffee machine is adapted to receive a filter holder containing a panel of pressed coffee powder, through which said water flow at high temperature and under high pressure passes in order to obtain brewing of the coffee-based beverage.

The coffee machine according to the invention is provided with a system for the pre-infusion of said coffee panel.

Correspondingly, the hydraulic circuit comprises a feeding duct connected to the water source, and a bypass duct branching off from said feeding duct upstream of the pump.

Downstream of the pump, said feeding duct branches off into one or more secondary feeding ducts, one for each brewing group of the coffee machine. Similarly, said bypass duct branches off into one or more secondary bypass ducts, one for each brewing group of the coffee machine.

For each brewing group, the pre-infusion system of the coffee machine according to the invention comprises a valve assembly which receives at its inlet a corresponding secondary feeding duct and a corresponding secondary bypass duct and selectively communicates said secondary feeding duct or said secondary bypass duct with an outlet duct carrying the water flow to the respective brewing group.

Depending on whether the valve assembly communicates the secondary feeding duct or the secondary bypass duct with the respective outlet duct, either a water flow under a pressure determined by the pump (high pressure) or a water flow under a pressure equal to the pressure present in the hydraulic circuit upstream of the pump (low pressure) will be sent to the corresponding brewing group.

According to the invention, the valve assembly consists of a single three-way valve, for example a three-way electro-valve.

It is therefore evident that the coffee machine according to the invention comprises a system for the pre-infusion of the coffee panel which is very simple and comprises a limited number of components: in particular, it does not involve the need of providing separate pumps for each brewing group and may provide for a single valve for each brewing group.

At the same time, the coffee machine according to the invention comprises a system for the pre-infusion of the coffee panel which allows several brewing groups to operate simultaneously with and independently of one another: a secondary feeding duct, the corresponding secondary bypass duct and the valve assembly into which said ducts converge form a pre-infusion sub-system for the respective brewing group, the operation of said pre-infusion sub-system being entirely independent of the operation of the pre-infusion sub-systems of the remaining brewing groups.

Advantageously, the pre-infusion system of the coffee machine according to the invention, besides effectively allowing uniform "wetting" of the coffee panel before the actual infusion step with high-pressure water, can also be used for effecting a post-infusion step after the aforesaid actual infusion step. In said post-infusion step, the valve assembly communicates again the secondary bypass duct with the respective outlet duct, whereby a low-pressure water flow is sent to the corresponding brewing group.

### Brief Description of Drawings

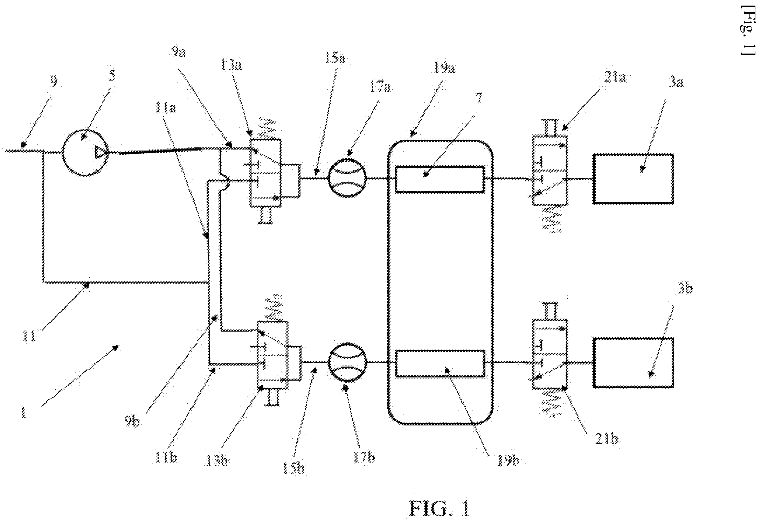

Features and advantages of the present invention will become more apparent from the description of a preferred embodiment, given by way of non-limiting example with reference to the annexed Figure 1.
Fig.1 schematically shows the hydraulic circuit of a coffee machine according to the invention.

### Description of Embodiments

Referring to Figure 1, this illustrates the hydraulic circuit of a coffee machine according to the invention. Said coffee machine may be, for example, an espresso coffee machine of the socalled "semi-automatic" type.

In a manner known per se, the coffee machine 1 according to the invention comprises a water source (not shown), one or more brewing groups, in particular two brewing groups 3a, 3b in the illustrated embodiment, and a hydraulic circuit connecting said water source to said brewing groups.

The water source may consist, for example, of a reservoir integrated in or connected to the coffee machine, or of a connecting element for connection to an outer water mains.

A pump 5, intended to raise the pressure of water circulating in said hydraulic circuit, and a boiler 7, intended to raise the temperature of water circulating in said hydraulic circuit, are arranged in said hydraulic circuit, whereby a water flow under high pressure and at high temperature can be passed through each brewing group 3a, 3b.

Each brewing group 3a,3b receives a filter holder containing a predetermined dose of pressed coffee powder (coffee panel), whereby infusion and brewing of a coffee-based beverage can be obtained by means of the passage of said water flow under high pressure and at thigh temperature through the coffee panel.

For the reasons set forth above, it is preferable that the actual infusion step be preceded by a pre-infusion step during which the coffee panel present in the filter holder inserted in the brewing group is passed through by a water flow under low pressure.

For this purpose, the hydraulic circuit of the coffee machine 1 according to the invention comprises a feeding duct 9 connected to the water source, and a bypass duct 11 branching off from said feeding duct upstream of the pump 5.

Downstream of the pump 5, the feeding duct 9 branches off into two secondary feed ducts or infusion ducts 9a, 9b, one for each brewing group 3a, 3b.

The bypass duct 11, in turn, branches off into two secondary bypass ducts or pre-infusion ducts 11a, 11b.

A first secondary feeding duct 9a and a first secondary bypass duct 11a converge towards a first valve assembly; in particular, in the illustrated embodiment, the first secondary feeding duct 9a and the first secondary bypass duct 11a are connected to the respective inlets of a first three-way electro-valve 13a.

Likewise, the second secondary feeding duct 9b and the second secondary bypass duct 11b converge towards a second valve assembly, and more specifically they are connected to the respective inlets of a second three-way electro-valve 13b.

The outlet of each three-way electro-valve 13a, 13b is connected to a respective outlet duct 15a, 15b.

As illustrated in Figure 1, a flowmeter 17a, 17b may be provided on each outlet duct 15a, 15b.

Each outlet duct 15a, 15b passes through the boiler 7 and the temperature of the water flowing in said outlet duct rises. To this aim, each outlet duct may be provided, at its portion arranged inside the boiler 7, with a heat exchanger 19a, 19b.

Downstream of the boiler 7, each outlet duct 15a, 15b arrives at the corresponding brewing group 3a, 3b. In a manner known per se, each brewing group 3a, 3b is provided with a brewing group valve 21a,21b of its own, arranged on the respective outlet duct 15a, 15b, for selectively allowing or preventing entry of a water flow into the brewing group itself.

It will be evident to the person skilled in the art that each three-way electro-valve 13a, 13b can alternatively communicate the corresponding secondary feeding duct 9a, 9b or the corresponding secondary bypass duct 11a, 11b with the respective outlet duct 15a, 15b and, thus, with the respective brewing group 3a, 3b.

Therefore, if the three-valve 13a, 13b communicates the secondary bypass duct 11a, 11b with the outlet duct 15a, 15b and, therefore, with the respective brewing group 3a, 3b, a water flow at high temperature but under low pressure (the pressure present in the hydraulic circuit upstream of the pump 5) will be delivered to said brewing group. In this way, pre-infusion of the coffee panel can be made.

Instead, if the three-way electro-valve 13a, 13b communicates the secondary feeding duct 9a, 9b with the outlet duct 15a, 15b and, therefore, with the respective brewing group 3a, 3b, a water flow at high temperature and under high pressure (the pressure determined by the operating conditions of the pump 5) will be delivered to said brewing group. In this way, actual infusion of the coffee panel can be made, with extraction of aromatic substances and brewing of the coffee-based beverage.

It should be noted that a pressure reducer may be arranged in the bypass duct 11 or in one or more of the secondary bypass ducts 11a, 11b (possibly in all the secondary bypass ducts 11a, 11b), so that a desired pressure value can be set for the pre-infusion step of all the brewing groups or of each of them.

Likewise, a pressure reducer may be arranged in the feeding duct 9 or in one or more of the secondary feeding ducts 9a, 9b (possibly in all the secondary feeding ducts 9a, 9b), so that a desired pressure value (different from the one determined by the pump 5) can be set for the infusion step of all the brewing groups or of each of them.

It is clear from the above that in its simplicity, the pre-infusion system of the coffee machine according to the invention allows the coffee panel to be fed with a water flow either with a first, lower, pressure value or with a second, higher, pressure value.

Introducing said pre-infusion system into the coffee machine does not involve introducing further pumps or boilers, whereby the only additional components related to said pre-infusion system are a three-way electro-valve for each brewing group. As a result, even in the case of a coffee machine comprising a high number of brewing groups, the increase in the complexity of the structure of the hydraulic circuit (and therefore in its production costs) is in any case limited.

Advantageously, the first secondary feeding duct 9a, the first secondary bypass duct 11a and the first electro-valve 13a form a pre-infusion sub-system for the first brewing group 3a, said pre-infusion sub-system being separate from and independent of the pre-infusion sub-system intended for the second brewing group 3b and consisting of the second secondary feeding duct 9b, the second secondary bypass duct 11b and the second electro-valve 13b. Therefore, each brewing group will be able to operate independently of the other brewing groups.

In other words, by acting onto the three-way electro-valves 13a, 13b it will be possible to deliver a high-pressure water flow to one of the brewing groups at the same time when a low-pressure water flow is delivered to the other brewing group.

The operation of the coffee machine according to the invention can be summarized as follows:
- while the pump 5 and the boiler 7 are switched on, a brewing cycle of a brewing group 3a of the coffee machine 1 is triggered;
- a filter holder containing a panel of pressed coffee powder is inserted into said brewing group 3a;
- the corresponding electro-valve 13a is switched to a position in which it communicates the secondary bypass duct 11a with the outlet duct 15a, and the corresponding brewing group valve 21a is switched to a position in which it allows the communication of the outlet duct 15a with the brewing group 3a; in this way the brewing group is fed with water at high temperature and under low pressure (pre-infusion) and the coffee panel is "wetted";
- after a predetermined time interval, the electro-valve 13a is switched to position in which it communicates the secondary feeding duct 9a with the outlet duct 15a; in this way, the brewing group is fed with water at high temperature and under high pressure (infusion) and the coffee-based beverage is brewed;
- after a further predetermined time interval, the brewing group electro-valve 21a is switched to a position in which it prevents the communication of the outlet duct 15a with the brewing group 3a and brewing of the coffee-based beverage ends.

It will be evident to the person skilled in the art that the coffee machine 1 will be equipped with or connected to a control unit having a memory containing all the parameters necessary for preparing the different coffee-based beverages selectable in said coffee machine, and said memory of said control unit will contain, among others, the values for the time interval of the pre-infusion step as well as those for the time interval of the infusion step for each beverage.

In some applications and for some types of coffee-based beverages it may be of advantage to end preparation by feeding water under low pressure to the coffee panel.

Advantageously, such a post-infusion step under low pressure can be obtained in the coffee machine according to the invention.

Indeed, it will be sufficient that the electro-valve 13a be switched again to a position in which it communicates the secondary bypass duct 11a with the outlet duct 15a, while keeping the brewing group valve 21a in the position in which it allows the communication of the outlet duct 15a with the brewing group 3a, so as to feed again the brewing group with water at high temperature and under low pressure.

This post-infusion step, too, will have a predetermined duration stored (for each beverage) in the memory of the control unit of the coffee machine.

Clearly, the embodiment described above in connection with the annexed figure has been provided merely by way of example, without any limiting meaning, and several modifications and variants within the reach of the person skilled in art can be made without thereby departing from the scope of protection as defined in the appended claims.

In particular, although the use of three-way electro-valves is particularly advantageous in terms of simplification of the hydraulic circuit and reduction of the overall number of components used, it is clear that the valve assemblies of the pre-infusion system might have any other structure suitable for selectively communicating their own outlet duct with the respective secondary feeding duct or the respective secondary bypass duct, and might comprise combinations of several valves arranged in series and/or in parallel.

## Claims

1. Coffee machine (1), comprising a water source, one or more brewing groups (3a, 3b) and a hydraulic circuit connecting said water source to said one or more brewing groups, wherein a pump (5), intended to raise the pressure of water circulating in said hydraulic circuit, and a boiler (7), intended to raise the temperature of water circulating in said hydraulic circuit, are arranged in said hydraulic circuit, between said water source and said one or more brewing groups, wherein each brewing group is arranged to receive a filter holder containing a coffee panel, wherein said hydraulic circuit comprises a feeding duct (9), connected to said water source, and a bypass duct (11), branching off from said feeding duct upstream of said pump (5), wherein said feeding duct (9), downstream of said pump (5), branches off into one or more secondary feeding ducts (9a, 9b), one for each brewing group of the coffee machine, and said bypass duct (11) branches off into one or more secondary bypass ducts (11a, 11b), one for each brewing group of the coffee machine, **characterized in that** each secondary feeding duct (9a, 9b) and each secondary bypass duct (11a, 11b) are connected to the inlets of a valve assembly (13a, 13b) consisting of a three-way valve that selectively communicates either said secondary feeding duct (9a, 9b) or said secondary bypass duct (11a, 11b) with a respective outlet duct (15a, 15b) which is connected to a respective brewing group (3a, 3b).

2. Coffee machine (1) according to claim 1, comprising two or more brewing groups.

3. Coffee machine (1) according to claim 1 or 2, wherein each valve assembly (13a, 13b) consists of a three-way electro-valve (13a, 13b).

4. Coffee machine (1) according to claim 1 or 2, wherein said boiler is arranged in said hydraulic circuit downstream of said valve assemblies (13a, 13b).

5. Coffee machine (1) according to claim 4, wherein said outlet ducts (15a, 15b) pass through said boiler (7) and are preferably provided with respective heat exchangers (19a, 19b) at said boiler.

6. Coffee machine (1) according to claim 1 or 2, wherein a brewing group valve (21a, 21b) is provided on each outlet duct (15a, 15b), said brewing group valve (21a, 21b) selectively allowing or preventing the connection of the respective outlet duct to the respective brewing group (3a, 3b).

7. Coffee machine (1) according to claim 2, wherein each secondary feeding duct (9a, 9b) with the corresponding secondary bypass duct (11a,11b) and the corresponding valve assembly (13a, 13b) forms a pre-infusion sub-system for the respective brewing group (3a, 3b), which pre-infusion sub-system can be driven and controlled separately from and independently of the pre-infusion sub-systems of the remaining brewing groups (3b, 3a).

8. Coffee machine (1) according to claim 1 or 2, wherein a pressure reducer is arranged in said bypass duct (11) or in one or more of said secondary bypass ducts (11a, 11b).

9. Coffee machine (1) according to claim 1 or 2, wherein a pressure reducer is arranged in said feeding duct (9) or in one or more of said secondary feeding ducts (9a, 9b).

10. Coffee machine (1) according to any of the preceding claims, wherein said water source consists of a reservoir or of a connecting element for connection to a water mains.

11. Coffee machine (1) according to any of the preceding claims, wherein said coffee machine is an espresso coffee machine, more particularly a "semi-automatic" espresso coffee machine.

12. Method for operating a coffee machine according to any of claims 1 - 11, wherein
- while said pump (5) and said boiler (7) are switched on, a brewing cycle of a brewing group (3a) of said coffee machine (1) is triggered; and
- a filter holder containing a panel of pressed coffee powder is inserted into said brewing group (3a);
**characterized in that** said method comprises:
- a pre-infusion step, in which the valve assembly (13a) corresponding to said brewing group is switched to a position in which it communicates its secondary bypass duct (11a) with its outlet duct (15a), and the brewing group valve (21a) of said brewing group is switched to a position in which it allows the communication of said outlet duct (15a) with said brewing group (3a);
- an infusion step, in which said valve assembly (13a) is switched to a position in which it communicates its secondary feeding duct (9a) with its outlet duct (15a), while said brewing group valve (21a) is kept in the position in which it allows the communication of said outlet duct (15a) with said brewing group (3a).

13. Method according to claim 12, comprising, downstream of said infusion step, a post-infusion step, in which said valve assembly (13a) is switched again to a position in which it communicates its secondary bypass duct (11a) with its outlet duct (15a), while said brewing group valve (21a) is kept in the position in which it allows the communication of said outlet duct (15a) with said brewing group (3a).

## Patentansprüche

1. Kaffeemaschine (1) mit einer Wasserquelle, einer oder mehreren Brühgruppen (3a, 3b) und einem Hydraulikkreis, der die Wasserquelle an die eine oder mehreren Brühgruppen anschließt, wobei eine Pumpe (5), die dafür vorgesehen ist, den Druck des in dem Hydraulikkreis enthaltenen Wassers zu erhöhen, und ein Boiler (7), der dafür vorgesehen ist, die Temperatur des in dem Hydraulikkreis enthaltenen Wassers zu erhöhen, in dem Hydraulikkreis zwischen der Wasserquelle und der einen oder mehreren Brühgruppen angeordnet sind, wobei jede Brühgruppe dafür ausgelegt ist, einen Filterhalter, der ein Kaffeepanel enthält, aufzunehmen, wobei der Hydraulikkreis eine Zuführleitung (9), die an die Wasserquelle angeschlossen ist, und eine Bypassleitung (11), die stromaufwärts von der Pumpe (5) von der Zuführleitung abzweigt, aufweist, wobei die Zuführleitung (9) stromabwärts von der Pumpe (5) in eine oder mehrere sekundäre Zuführleitungen (9a, 9b) verzweigt, eine für jede der Brühgruppen der Kaffeemaschine, und die Bypassleitung (11) in ein oder mehrere sekundäre Bypassleitungen (11a, 11b), verzweigt, eine für jede Brühgruppe der Kaffeemaschine, **dadurch gekennzeichnet, dass** jede sekundäre Zuführleitung (9a, 9b) und jede sekundäre Bypassleitung (11a, 11b) an die Einlässe einer Ventilbaugruppe (13a, 13b) angeschlossen sind, die ein Dreiwegeventil aufweist, das selektiv entweder mit der sekundären Zuführleitung (9a, 9b) oder der sekundären Bypassleitung (11a, 11b) mit einer entsprechenden Auslassleitung (15a, 15b), die an eine entsprechende Brühgruppe (3a, 3b) angeschlossen ist, kommuniziert.

2. Kaffeemaschine (1) nach Anspruch 1, mit zwei oder mehr Brühgruppen.

3. Kaffeemaschine (1) nach Anspruch 1 oder 2, wobei jede Ventilbaugruppe (13a, 13b) aus einem Dreiwege-Elektroventil (13a, 13b) besteht.

4. Kaffeemaschine (1) nach Anspruch 1 oder 2, wobei der Boiler in dem Hydraulikkreis stromabwärts von den Ventilbaugruppen (13a, 13b) angeordnet ist.

5. Kaffeemaschine (1) nach Anspruch 4, wobei die Auslassleitungen (15a, 15b) durch den Boiler (7) hindurchführen und bevorzugt an dem Boiler mit entsprechenden Wärmetauschern (19a, 19b) versehen sind.

6. Kaffeemaschine (1) nach Anspruch 1 oder 2, wobei ein Brühgruppenventil (21a, 21b) an jeder Auslassleitung (15a, 15b) vorgesehen ist, wobei das Brühgruppenventil (21a, 21b) selektiv die Verbindung der entsprechenden Auslassleitung mit der entsprechenden Brühgruppe (3a, 3b) ermöglicht oder verhindert.

7. Kaffeemaschine (1) nach Anspruch 2, wobei jede sekundäre Zuführleitung (9a, 9b) mit der entsprechenden sekundären Bypassleitung (11a, 11b) und der entsprechenden Ventilbaugruppe (13a, 13b) ein Vorbrühsubsystem für die entsprechende Brühgruppe (3a, 3b) bildet, wobei das Vorbrühsubsystem separat und unabhängig von den Vorbrühsubsystemen der verbleibenden Brühgruppen (3b, 3a) angetrieben und gesteuert werden kann.

8. Kaffeemaschine (1) nach Anspruch 1 oder 2, wobei ein Druckminderer in der Bypassleitung (11) oder in einer oder mehreren der sekundären Bypassleitungen (11a, 11b) angeordnet ist.

9. Kaffeemaschine (1) nach Anspruch 1 oder 2, wobei ein Druckminderer in der Zuführleitung (9) oder in einer oder mehreren der sekundären Zuführleitungen (9a, 9b) angeordnet ist.

10. Kaffeemaschine (1) nach einem der vorstehenden Ansprüche, wobei die Wasserquelle aus einem Reservoir oder einem Verbindungselement zum Anschließen an eine Wasserversorgung besteht.

11. Kaffeemaschine (1) nach einem der vorstehenden Ansprüche, wobei die Kaffeemaschine eine Espressokaffeemaschine, insbesondere eine "semiautomatische" Espressokaffeemaschine ist.

12. Verfahren zum Betreiben einer Kaffeemaschine nach einem der Ansprüche 1 bis 11, wobei
- während die Pumpe (5) und der Boiler (7) eingeschaltet sind, ein Brühzyklus einer Brühgruppe (3a) der Kaffeemaschine (1) ausgelöst wird, und
- ein Filterhalter, der ein Panel aus gepresstem Kaffeepulver enthält, in die Brühgruppe (3a) eingeführt wird,
**dadurch gekennzeichnet, dass** die Methode aufweist:
- einen Vorbrühschritt, in dem die Ventilbaugruppe (13a), die der Brühgruppe entspricht, in eine Position geschaltet wird, in der sie ihre sekundäre Bypassleitung (11a), ihre Auslassleitung (15a) verbindet und das Brühgruppenventil (21a) der Brühgruppe in eine Stellung geschaltet wird, in der sie die Verbindung die Auslassleitung (15a) mit der Brühgruppe (3a) ermöglicht,
- einen Brühschritt, in dem die Ventilbaugruppe (13a) in eine Stellung geschaltet wird, in der sie ihre sekundäre Zuführleitung (9a) mit ihrer Auslassleitung (15a) verbindet, wobei das Brühgruppenventil (21a) in der Stellung gehalten wird, in der es die Verbindung der Auslassleitung (15a) mit der Brühgruppe (3a) ermöglicht.

13. Verfahren nach Anspruch 12, wobei nach dem Brühschritt ein Postbrühschritt, in dem die Ventilbaugruppe (13a) wieder in eine Stellung geschaltet wird, in der ihre sekundäre Bypassleitung (11a) mit ihrer Auslassleitung (15a) verbunden ist, während das Brühgruppenventil (21a) in der Stellung gehalten wird, in der es die Verbindung der Auslassleitung (15a) mit der Brühgruppe (3a) ermöglicht.

## Revendications

1. - Machine à café (1), comprenant une source d'eau, un ou plusieurs groupes d'infusion (3a, 3b) et un circuit hydraulique reliant ladite source d'eau audit ou auxdits groupes d'infusion, une pompe (5), destinée à augmenter la pression de l'eau circulant dans ledit circuit hydraulique, et un chauffe-eau (7), destiné à augmenter la température de l'eau circulant dans ledit circuit hydraulique, étant disposés dans ledit circuit hydraulique, entre ladite source d'eau et ledit ou lesdits groupes d'infusion, chaque groupe d'infusion étant agencé pour recevoir un porte-filtre contenant un panneau de café, ledit circuit hydraulique comprenant un conduit d'alimentation (9), relié à ladite source d'eau, et un conduit de dérivation (11), se ramifiant à partir dudit conduit d'alimentation en amont de ladite pompe (5), ledit conduit d'alimentation (9), en aval de ladite pompe (5), se ramifiant en un ou plusieurs conduits d'alimentation secondaires (9a, 9b), un pour chaque groupe d'infusion de la machine à café, et ledit conduit de dérivation (11) se ramifiant en un ou plusieurs conduits de dérivation secondaires (11a, 11b), un pour chaque groupe d'infusion de la machine à café, **caractérisé par le fait que** chaque conduit d'alimentation secondaire (9a, 9b) et chaque conduit de dérivation secondaire (11a, 11b) sont reliés aux entrées d'un ensemble vanne (13a, 13b) consistant en une vanne à trois voies qui fait communiquer de manière sélective soit ledit conduit d'alimentation secondaire (9a, 9b), soit ledit conduit de dérivation secondaire (11a, 11b), avec un conduit de sortie respectif (15a, 15b) qui est relié à un groupe d'infusion respectif (3a, 3b).

2. - Machine à café (1) selon la revendication 1, comprenant au moins deux groupes d'infusion.

3. - Machine à café (1) selon la revendication 1 ou 2, dans laquelle chaque ensemble vanne (13a, 13b) consiste en une électrovanne à trois voies (13a, 13b).

4. - Machine à café (1) selon la revendication 1 ou 2, dans laquelle ledit chauffe-eau est disposé dans ledit circuit hydraulique en aval desdits ensembles vannes (13a, 13b).

5. - Machine à café (1) selon la revendication 4, dans laquelle lesdits conduits de sortie (15a, 15b) traversent ledit chauffe-eau (7) et comportent, de préférence, des échangeurs de chaleur respectifs (19a, 19b) au niveau dudit chauffe-eau.

6. - Machine à café (1) selon la revendication 1 ou 2, dans laquelle une vanne de groupe d'infusion (21a, 21b) est disposée sur chaque conduit de sortie (15a, 15b), ladite vanne de groupe d'infusion (21a, 21b) permettant ou empêchant de manière sélective le raccordement du conduit de sortie respectif au groupe d'infusion respectif (3a, 3b) .

7. - Machine à café (1) selon la revendication 2, dans laquelle chaque conduit d'alimentation secondaire (9a, 9b), avec le conduit de dérivation secondaire correspondant (11a, 11b) et l'ensemble vanne correspondant (13a, 13b), forme un sous-système de pré-infusion pour le groupe d'infusion respectif (3a, 3b), lequel sous-système de pré-infusion peut être entraîné et commandé séparément et indépendamment des sous-systèmes de pré-infusion des groupes d'infusion restants (3b, 3a).

8. - Machine à café (1) selon la revendication 1 ou 2, dans laquelle un réducteur de pression est disposé dans ledit conduit de dérivation (11) ou dans un ou plusieurs desdits conduits de dérivation secondaires (11a, 11b) .

9. - Machine à café (1) selon la revendication 1 ou 2, dans laquelle un réducteur de pression est disposé dans ledit conduit d'alimentation (9) ou dans un ou plusieurs desdits conduits d'alimentation secondaires (9a, 9b) .

10. - Machine à café (1) selon l'une quelconque des revendications précédentes, dans laquelle ladite source d'eau consiste en un réservoir ou un élément de raccordement en vue d'un raccordement à un réseau d'eau.

11. - Machine à café (1) selon l'une quelconque des revendications précédentes, ladite machine à café étant une machine à café expresso, plus particulièrement une machine à café expresse « semi-automatique ».

12. - Procédé de fonctionnement d'une machine à café selon l'une quelconque des revendications 1 à 11, dans lequel
- tandis que ladite pompe (5) et ledit chauffe-eau (7) sont sous tension, un cycle d'infusion d'un groupe d'infusion (3a) de ladite machine à café (1) est déclenché ; et
- un porte-filtre contenant un panneau de café pressé en poudre est introduit dans ledit groupe d'infusion (3a) ;
**caractérisé par le fait que** ledit procédé comprend :
- une étape de pré-infusion, dans laquelle l'ensemble vanne (13a) correspondant audit groupe d'infusion est commuté à une position dans laquelle il fait communiquer son conduit de dérivation secondaire (11a) avec son conduit de sortie (15a), et la vanne de groupe d'infusion (21a) dudit groupe d'infusion est commutée à une position dans laquelle elle permet la communication dudit conduit de sortie (15a) avec ledit groupe d'infusion (3a) ;
- une étape d'infusion, dans laquelle ledit ensemble vanne (13a) est commuté à une position dans laquelle il fait communiquer son conduit d'alimentation secondaire (9a) avec son conduit de sortie (15a), tandis que ladite vanne de groupe d'infusion (21a) est maintenue dans la position dans laquelle elle permet la communication dudit conduit de sortie (15a) avec ledit groupe d'infusion (3a).

13. - Procédé selon la revendication 12, comprenant, en aval de ladite étape d'infusion, une étape de post-infusion, dans laquelle ledit ensemble vanne (13a) est commuté à nouveau à une position dans laquelle il fait communiquer son conduit de dérivation secondaire (11a) avec son conduit de sortie (15a), tandis que ladite vanne de groupe d'infusion (21a) est maintenue dans la position dans laquelle elle permet la communication dudit conduit de sortie (15a) avec ledit groupe d'infusion (3a).
